# EUROPEAN PATENT SPECIFICATION

(11) **EP 0 855 653 B1**
(45) Date of publication and mention of the grant of the patent: **06.10.2004**
(21) Application number: 97410009.1
(22) Date of filing: 23.01.1997
(51) Int. Cl.: G06F 13/42, G06F 13/16

(54) **Memory controller with a programmable strobe delay**
Speichersteuerungsvorrichtung mit programmierbarer Impulsverzögerung
Dispositif de commande de mémoire avec retard d'impulsions programmable

(43) Date of publication of application: 29.07.1998
(73) Proprietor: Hewlett-Packard Company, A Delaware Corporation, Palo Alto, CA 94304 (US)
(72) Inventor: Thoulon, Pierre-Yves, 38000 Grenoble (FR)
(74) Representative: Squibbs, Robert Francis

(56) References cited:
- EP-A- 0 379 772
- WO-A-97/15897
- US-A- 5 509 138
- US-A- 5 557 782
- US-A- 5 560 000

## Description

### Field of the Invention

The present invention relates to a memory controller with a programmable strobe delay. It also relates to a method for programming such a memory controller, and to a method for enhancing the reliability of data reading in a memory controller.

### Background of the Invention

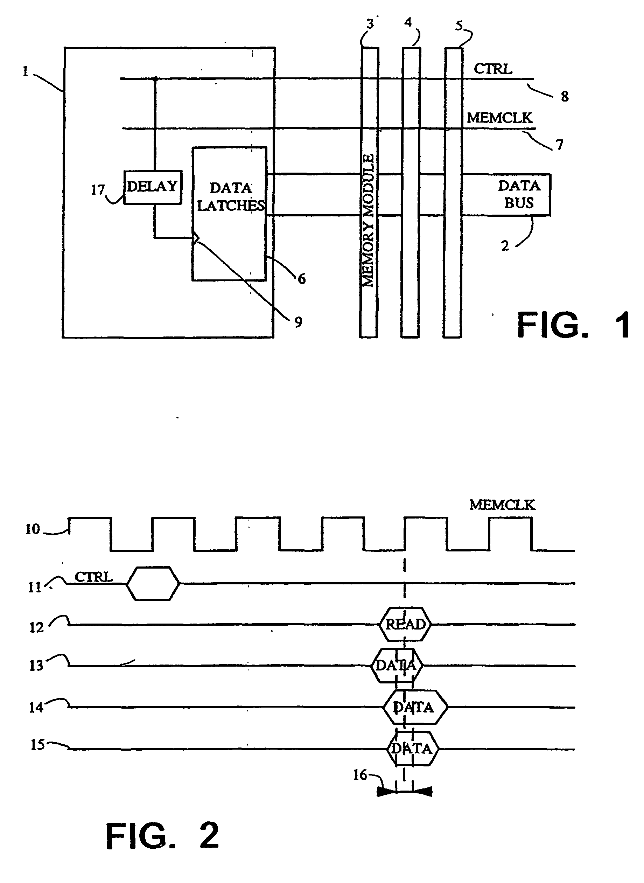

The invention addresses the problem of reading data from memories. Figure 1 of the accompanying drawings shows a diagrammatic view of a conventional memory controller 1 together with its associated data bus 2, and several memory modules 3, 4 and 5. The memory controller inter alia comprises a series 6 of data latches connected to the data bus 2. A memory clock signal MEMCLK is present on line 7 in the memory controller 1 and in the different memory modules. The memory controller 1 may transmit on line 8 a control signal CTRL for reading data from the different memory modules, the timing of this signal being related to the clock signal MEMCLK. Data present on the memory bus may be latched in the data latches 6 when an input 9 of the latches is enabled by a strobe signal. The memory address control lines and memory write control lines are not represented in Figure 1.

Figure 2 is a timing diagram of different signals in the device of Figure 1. In Figure 2, 10 is the memory clock MEMCLK signal on line 7. When data is to be read from the memory modules 3, 4, 5, a read signal CTRL 11 is transmitted on line 8. A certain number of memory clock cycles later - say three in the case of Figure 2, the input 9 of the data latches 6 in the memory controller is enabled for latching the data coming from the memory modules 3, 4, 5, which is present on the data bus 2. Reference 12 identifies the strobe signal for enabling the data latches 6, whereas 13, 14, and 15 identify the respective data sent on the data bus 2 by the different memory modules 3, 4, 5. Reference 16 identifies the data window, that is the time period during which the data from the memory modules 3, 4, and 5 may validly be read.

In the Figure 1 system, the delay between the read control signal 11 and the strobe signal enabling the data latches at their input 9 is set by hardware, as shown in Figure 1 by the block 17 between CTRL line 8 and the input 9.

It has also been proposed read data into the latches 6 every clock cycle, the strobe signal being generated at an appropriate time in each clock cycle to ensure proper reading of the data bus. However, the contents of the data latches is only considered valid a predetermined number of MEMCLK clock signal edges after assertion of the CTRL signal as counted by any appropriate circuitry. In this approach, the strobe signal is a clock signal formed by a delayed version of the clock signal MEMCLK, the delay between these two clocks being set, for example, by a conductive path of a given length on the memory-controller circuitboard, between two pins of the memory controller.

The above-described arrangements suffer from several drawbacks. First, they do not address the problem of the effects of changes of configuration in the memory modules, and will therefore not operate for highly loaded and/or very high speed memories. Second, the computation of the strobe-signal delay is a difficult task, and involves numerous experimentations for determining a correct statistical value of the delay.

### Summary of the Invention

The present invention addresses the problem of data reading encountered in heavily loaded or high speed memory configurations. This problem arises where the memory bus is highly loaded, e.g. where there are four memory modules or more on the same memory bus; it also arises at high speed, for example 100 MHz or more for the memory clock, for synchronous memory systems. In this case, the difference of transmission time between the memory modules cannot be neglected: the data window 16 (see Figure 1) for reading the data may become fairly small, and even too small for ensuring correct reading of the data in all possible configurations.

Indeed, the data from each memory module may be read for a duration which is typically around 4 or 5 ns for a clock frequency of 125 MHz, and the data window 16 may get reduced by the various skews in the system.

Moreover, the invention addresses the problem arising from the fact that the position and duration of the data window 16 may depend on the actual load on the memory bus 2, which itself depends on the actual configuration of the memory modules. This configuration is not fixed, and may vary at any time according to the user's wish. These problems make it very difficult to design a memory controller that can run at full speed and reliably latch data whatever the memory configuration.

The present invention provides a solution to the problem of providing a memory controller that may run at full speed reliably in any memory configuration, whatever the load on the memory bus and the actual configuration of the memory controller, and even for very high speeds.

EP-A-379772 describes a system for providing asynchronous communication between at least one central processing unit and at least one associated memory unit with specially programmed timing signals to latch, select and transmit data between them.

The disclosure WO-A-98/15897 is a prior art document according to Article 54(3)EPC.

According to one aspect of the invention, there is provided a system having at least one memory module and a memory controller, the memory controller comprising:
-- a clock line for a clock signal;
-- data receiving means for connecting to the at least one memory module;
-- data latching means connected to the data receiving means, for latching data under control of a strobe signal; and
-- programmable means for providing said strobe signal in programmed timing relation to said clock signal characterised by the system comprising:
   -- first means for repeatedly measuring the value of a parameter indicative of the signal delay characteristics in the system in order to detect variations therein, and
   -- second means responsive to variations in said signal delay characteristics detected by said first means, to change the programming of said programmable means to compensate said programmed timing relation for said variations.

In one embodiment, the programmable means comprise a programmable delay operatively connected between the clock line and the data latching means. In another embodiment, the programmable means comprise a programmable delay operatively connected between a memory-control line and the data latching means, the memory control line serving to carry a memory-read signal produced in timed relation to the clock signal.

Preferably, delay-programming means are provided for automatically programming the programmable means for providing the strobe signal, the programming means being operative to effect this programming, for example, upon power up of the system including the memory controller.

The programmable means in such a memory controller can be programmed by:
(a) - programming the programmable means to a given value;
(b) -using the memory controller to write data into memory means;
(c) -using the memory controller to read the data written into the memory means;
(d) -determining whether the data read in step (b) are identical to the data written in step (c);
(e) -repeating steps (a) to (d) until step (d) gives a positive result for at least one given value.
(f) -programming the programmable means to one of said at least one given value.
   Step (e) may comprise incrementing the given value, and in this case, once step (d) has given a positive result, steps (a) to (d) are repeated until step (d) gives a negative result.
   Alternatively, step (e) may comprise decrementing the given value, and in this case, once step (d) has given a positive result, steps (a) to (d) are repeated until step (d) gives a negative result.
   In both cases, step (f) preferably comprises choosing a value among a range of values for which step (d) gives a positive result.
   It is also possible that step (e) is repeated for all possible programmable values. In this case, step (f) may comprise: (g) determining ranges of values for which step (d) gives a positive result;
(h) determining the largest of these ranges of values;
the programmable means being programmed to a value comprised in the largest of said ranges.

According to a further aspect of the present invention, there is provided a method as defined in independent claim 12.

Further embodiments of the invention are specified in the appended dependent claims.

### Brief Description of the Drawings

A memory controller embodying the invention will now be described, by way of non-limiting example, with reference to the accompanying drawings, in which:
- **Figure 1**: is a diagrammatic view of a conventional memory controller together with several memory modules;
- **Figure 2**: is a timing diagram of different signals in the device of Figure 1;
- **Figure 3**: is a diagrammatic view of a memory controller embodying the invention together with several memory modules;
- **Figure 4**: is a flow chart of a method for programming the strobe signal delay in accordance with the invention.
- **Figure 5**: shows a flowchart of another method for programming the strobe signal delay in accordance with the invention.

### Best Mode of Carrying Out the Invention

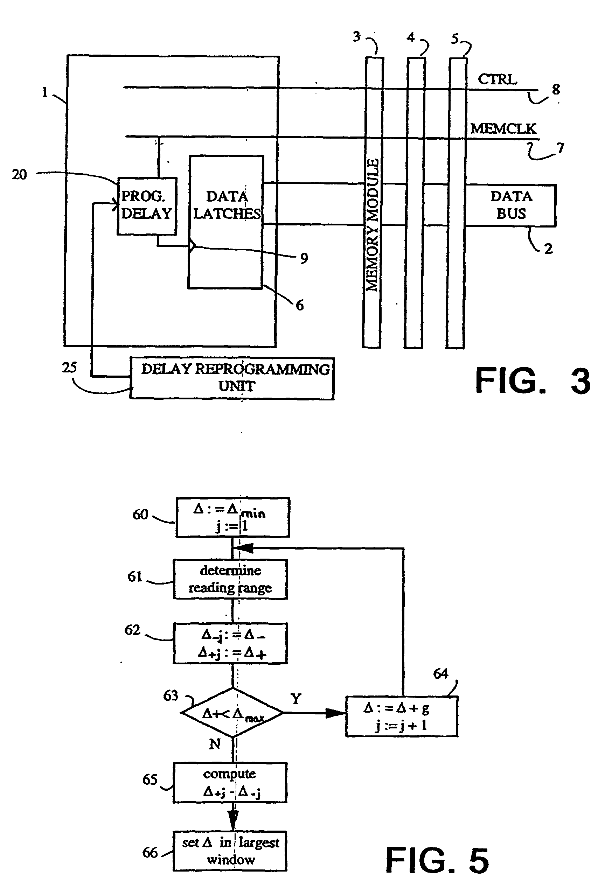

Figure 3 shows a diagrammatic view of a memory controller 19 embodying the invention together with several memory modules. The memory controller 19 of Figure 3 comprises data latches 6 for latching the data coming from the memory modules 3, 4, and 5 on the data bus 2; these memory modules may for instance be comprised of SDRAM modules. The data latches 6 are enabled by a strobe signal on an input 9. A memory clock signal MEMCLK is present on a clock line 7. In the same general manner described above in relation to the prior art, the strobe signal causes data to be read into the latches 6 every clock cycle, this data being only treated as valid a predetermined number of MEMCLK cycles after assertion of the CTRL signal.

In accordance with the present invention the memory controller 19 comprises programmable means 20 for producing the strobe signal in a programmed timing relation to the clock signal MEMCLK. These programmable means can be used for programming the strobe delay according to the memory configuration, so as to ensure correct data reading relative to the CTRL signal (it being possible to time the strobe signal from the MEMCLK signal because the memory data read signal CTRL is also timed from the MEMCLK signal). As shown in Figure 3, the means 20 may for instance comprise a programmable delay line connected between the memory clock line 7 and the enabling input 9 of the data latches 6. This programmable delay line may comprise a programmable register that determines the delay duration in known manner. This makes the programming of the strobe delay easy to implement, through a simple software programming of one register of the memory controller.

The range and granularity of the strobe delay may depend on the implementation. As an example, a range of 2 to 10 nanoseconds, and a granularity of 150 picoseconds were found to be sufficient for a memory controller accessing up to 4 memory SDRAM modules, at a clock frequency of 125 MHz. If the programmable means 20 comprise a register of the memory controller the size of this register is determined by the range and granularity of the strobe delay.

Figure 3 only shows the components of the memory controller necessary for the understanding of the present invention. The other components of the memory controller 19 are not represented. For instance in the present embodiment the memory controller will include circuitry for enabling reading of the data latches 6 only a predetermined number of MEMCLK cycles after assertion of the CTRL and this circuitry is not represented in Figure 3.

Of course, it would also be possible to implement the present invention in a memory controller of the Figure 1 form by deriving the strobe signal from the control signal CTRL using a programmable delay line. Because the CTRL signal is timed from the MEMCLK signal, this embodiment like that of Figure 3, times the strobe signal relative to the MEMCLK signal though in this case indirectly.

Whichever implementation is used, the memory controllers embodying this invention allow programming of the strobe signal delay according to the circumstances, for instance according to memory modules configuration, according to memory load, and so on. It allows the memory controller to run at full speed reliably in any memory configuration, notwithstanding variations in load on the memory bus and the actual configuration of the memory controller.

As regards the programming of the strobe signal delay into the programmable means, this may be done whenever necessary. In a preferred embodiment of the invention, the means 20 for deriving the strobe signal are programmed by a delay-programming functional block or unit 25 at power-on of the memory controller, to ensure that any change in the memory configuration is properly taken into account. It is also possible to proceed with the programming whenever a change of the memory configuration is detected. The unit 25 for programming the programmable means 20 may take the form of dedicated hardware circuitry provided internally or externally of the memory controller or by a system microprocessor operating under firmware control.

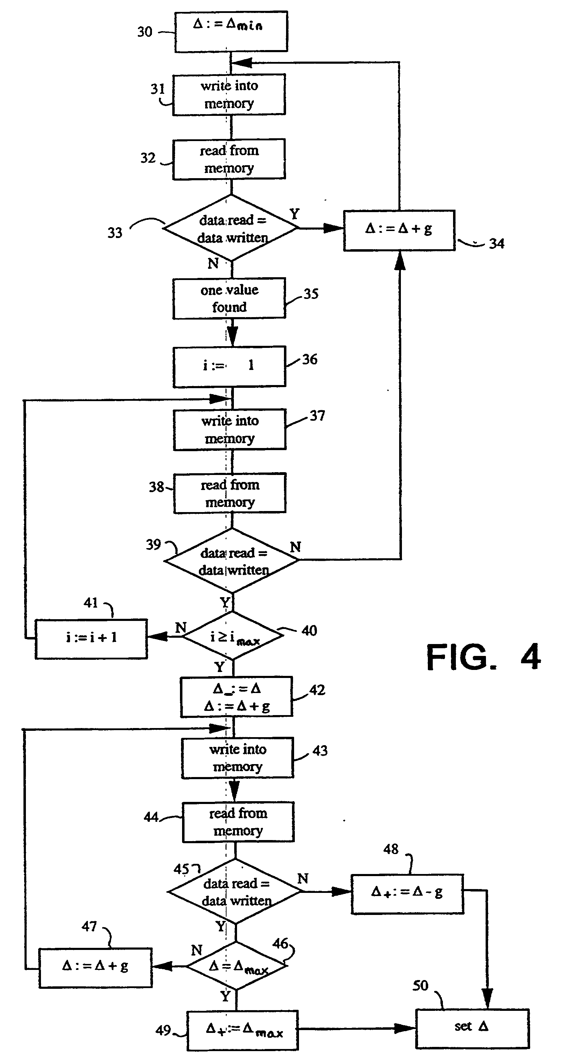

Figure 4 is a flow chart of a method for programming the strobe signal delay in accordance with the invention. The method of Figure 4 is a simple and quick method for programming the means 20 for deriving the strobe signal. In the method of Figure 4, it is assumed that the means 20 for deriving the strobe signal can be programmed to set a delay Δ between the memory clock signal and the strobe signal. The delay Δ may be programmed in a range Δₘᵢₙ-Δₘₐₓ, with a granularity of g.

In steps 30-42, the program determines a lowest value Δ_ ensuring a correct reading of the data from the memory.

In step 30, the delay Δ is set to the minimum value Δₘᵢₙ. The program proceeds to step 31.

In step 31, data is written into the memory. The program proceeds to step 32.

In step 32, data is read from the memory. The program proceeds to step 33.

In step 33, the data read from the memory is compared to the data written into the memory. If the data read and written are different, the program proceeds to step 34. If the data read and written are not different, the program proceeds to step 35.

In step 34, the delay is incremented by g. The program then proceeds to step 31.

By step 35, Δ has a value which has already produced one correct reading of the data in the memory. Preferably, this value is checked in steps 36-41 to ensure that this value of Δ gives correct reading of data for more than one operation. This reliability test is not compulsory, and may be skipped. In this case, the program proceeds directly to step 42.

In steps 36-41, the reliability of the write/read operation with the current value of Δ is checked, by performing iₘₐₓ write and read operations. In step 36, a parameter i is set at 1. The program proceeds to step 37.

In step 37, data is written into the memory. The program proceeds to step 38.

In step 38, data is read from the memory. The program proceeds to step 39.

In step 39, the data read from the memory is compared to the data written into the memory. If the data read and written are different, it is determined that the current value of Δ is not reliable; the program proceeds to step 34. If the data read and written are the same, the program proceeds to step 40.

In step 40, it is checked whether iₘₐₓ write and read operations have been performed, that is whether i > = iₘₐₓ. If this is not the case, the program proceeds to step 41. If this is the case, the current value of Δ has proved reliable for iₘₐₓ + 1 write and read operations. The program then proceeds to step 42.

In step 41, i is incremented by 1. The program then proceeds to step 37.

In step 42, the current value of Δ is stored as Δ_; this value of Δ is the lowest value for which the reading of the data is successful. The value of Δ is then incremented by g. The program then proceeds to step 43.

In steps 43-49 the program determines a value Δ₊ for the delay. In the range from Δ_ to Δ₊, data may be read correctly from the memory.

In step 43, data is written into the memory. The program proceeds to step 44.

In step 44, data is read from the memory. The program proceeds to step 45.

In step 45, the data read from the memory is compared to the data written into the memory. If the data read and written are identical, the program proceeds to step 46. If the data read and written are different, the program proceeds to step 48.

In step 46, it has been determined that the current value of Δ is still resulting in at least one correct reading of the data from the memory. It is possible, optionally, to check whether the current value of Δ ensures correct reading for more that one write/read operation. This may be done using program steps similar to steps 36-41: however, this reliability test is not compulsory, and may be skipped. The current value of A is then compared to the maximum value Δₘₐₓ. If Δ = Δₘₐₓ, the program proceeds to step 49; else, the program proceeds to step 47.

In step 47, the delay Δ is incremented by g. The program proceeds to step 43.

In step 48, a value of Δ giving at least one incorrect reading of the data in the memory has been reached. At that step it has been determined that values of Δ between Δ_ and Δ - g, i.e. the current value of Δ minus one increment ensure correct reading in the memory. The value Δ - g is stored as Δ₊. The program then proceeds to step 50.

In step 49, it has been determined that the values of Δ between Δ₋ and Δₘₐₓ result in a correct reading of the data in the memory. The value Δmax is stored as Δ₊. The program then proceeds to step 50.

By step 50, it has been ascertained that values of Δ between Δ₋ and Δ₊ result in correct reading of the data. The delay Δ may then be programmed at any value within this range, e.g. at the value nearest to (Δ+ - Δ_)/2 .

The method of Figure 4 allows for a simple and quick setting of the delay Δ. Other methods are possible; the method of Figure 4 may also be modified. For instance, in the flow chart of Figure 4, each reading step follows a writing step; the information which is written into the memory may vary for each write/read operation, to ensure correct statistical check of the memory; however, it would also be possible to have only one writing step, and to read always the same data. It is also possible to start by determining Δ₊, and then determine Δ_, the necessary changes being obvious for the person skilled in the art.

In a preferred embodiment of the invention, the whole range of delay values is checked to ascertain whether there exist several appropriate reading windows [Δ_; Δ₊]; if this is the case, a value of Δ in the largest window is preferably chosen. Figure 5 shows a flowchart for this method.

In the first step 60, the delay Δ is set to the minimum value Δₘᵢₙ. A parameter j is set to 1. The program proceeds to step 61.

In step 61, a reading range or window [Δ₋; Δ₊] is determined, e.g. using steps 31-49 of Figure 4. The program proceeds to step 62.

In step 62, the current values of Δ₋ and Δ₊ are stored as Δ₋ⱼ and Δ₊ⱼ. The program then proceeds to step 63.

In step 63, Δ₊ is compared to Δₘₐₓ. If Δ₊ is equal to Δₘₐₓ, there cannot be any further appropriate window. In this case, the program proceeds to step 65. If this is not the case, the program proceeds to step 64.

In step 64, j is incremented by one, and Δ is incremented by g. The program then proceeds to step 61.

In step 65, for all possible values of j, the difference Δ₊ⱼ - Δ₋ⱼ is computed. The largest difference is determined. This provides the largest reading window. The program then proceeds to step 66.

In step 66, delay Δ is programmed at any value within this largest reading window, e.g. at the value nearest to (Δ₊ⱼ - Δ₋ⱼ)/2, j being the index of the largest reading window, as determined in step 65.

The method of Figure 5 ensures that the value for the delay is chosen in the largest possible range appropriate for reading data from the memory.

The description of the best mode of carrying out the invention was only given as an example. Other embodiments of the invention can be used; for instance, a method other than the one depicted in Figure 4 may be used for programming the strobe signal delay. It is possible to use programming means 20 other than a register in the memory controller, if other suitable programming capabilities are provided.

In addition to programming in a particular value for the strobe signal delay at predetermined points during system operation, the delay-programming unit 25 can be arranged to incrementally adjust the programmed delay value in dependence on variations in supply voltage and/or temperature whereby to compensate for any undesired drifting of the strobe signal during use of the memory controller.

This can be implemented by using a circuit for measuring the value of a parameter sensitive to the signal delay characteristics in the memory subsystem. By way of example, the measured parameter could be the number of inverters in a chain of inverters needed to produce a predetermined signal delay. The unit 25 further comprises means responsive to changes in the measured parameter value over time to determine an appropriate change in the delay set into the programmable delay 20; these means could take the form of a look-up table. Once an appropriate change in delay has been determined, the unit 25 changes the programmed delay by the appropriate amount.

Although the simplest way of producing the strobe signal is to delay either the MEMCLK or CTRL signal as described above, it will be appreciated that other ways are possible. For example, a separate clock circuit could be used to generate the strobe signal, this clock circuit being synchronised with the MEMCLK signal in a desired phase relation thereto by a suitable phase-locked loop.

## Claims (Claims for the following Contracting State(s): DE)

1. A system having at least one memory module (3, 4, 5) and a memory controller (19), the memory controller comprising:
-- a clock line (7) for a clock signal;
-- data receiving means (2) for connecting to the at least one memory module (3, 4, 5);
-- data latching means (6) connected to the data receiving means (2), for latching data under control of a strobe signal; and
-- programmable means (20) for providing said strobe signal in programmed timing relation to said clock ignal **characterised by** the system comprising:
-- first means for periodically measuring the value of a parameter indicative of the signal delay characteristics in the system in order to detect variations therein, and
-- second means responsive to variations in said signal delay characteristics detected by said first means, to change the programming of said programmable means to compensate said programmed timing relation for said variations.

2. A system according to claim 1, wherein the programmable means (20) comprise a programmable delay operatively connected between said clock line (7) and said data latching means (6).

3. A system according to claim 1, further comprising:
-- a memory control line (8) for a memory-read signal, and
-- means for producing said memory-read signal in timed relation to said clock signal;
said programmable means (20) being a programmable delay operatively connected between said memory-control line and said data latching means.

4. A system according to any one of the preceding claims, wherein the programmable means (20) comprise a programmable register for setting said programmed timing relation.

5. A system according to claim 4, wherein said programming means effects said programming upon power up of said system.

6. A system as claimed in any preceding claim wherein the programmable means comprises means arranged to perform the following steps
(a) - programming the programmable means to a given value;
(b) -using the memory controller to write data into memory means;
(c) -using the memory controller to read the data written into the memory means;
(d) -determining whether the data read in step (b) are identical to the data written in step (c);
(e) -repeating steps (a) to (d) until step (d) gives a positive result for at least one given value.
(f) -programming the programmable means to one of said at least one given value.

7. A system as claimed in claim 6, arranged so that said step (e) comprises incrementing said given value, and, once step (d) has given a positive result, steps (a) to (d) are repeated until step (d) gives a negative result.

8. A system as claimed in claim 6 arranged so that said step (e) comprises decrementing said given value, and, once step (d) has given a positive result, steps (a) to (d) are repeated until step (d) gives a negative result.

9. A system as claimed in claim 7 or claim 8, arranged so that step (f) comprises choosing a value among a range of values for which step (d) gives a positive result.

10. A system as claimed in claim 6, arranged so that step (e) is repeated for all possible programmable values.

11. A system as claimed in claim 10 arranged so that step (f) comprises:
(g)determining ranges of values for which step (d) gives a positive result;
(h) determining the largest of these ranges of values;
and the programmable means being programmed to a value comprised in the largest of said ranges.

12. A method of enhancing the reliability of data reading in a memory controller from at least one memory module within a system, said memory controller comprising data receiving means (2) for connecting to said at least one memory module (3,4,5) and data latching means (6) connected to said data receiving means (2), for latching data under control of said reading strobe signal, said method comprising the step of
programming in programmable means within the memory controller a delay between a clock signal (10) and a reading strobe signal; said method being **characterized by** the steps of
periodically measuring the value of a parameter indicative of the signal delay characteristics in the system in order to detect variations therein; and
-- responding to variations in said signal delay characteristics detected by said first means, to change the programming of said delay to compensate said programmed timing relation for said variations.

13. A method according to claim 12, wherein said programming is carried out at power-on of the memory controller.

14. A method according to claim 12, wherein said programming is carried out to compensate for voltage variations.

15. A method according to claim 12, wherein said programming is carried out to compensate for variations in processing load.

16. A method according to claim 12, wherein said programming is carried out to compensate for temperature variations.

## Claims (Claims for the following Contracting State(s): FR, GB)

1. A system having at least one memory module (3, 4, 5) and a memory controller (19), the memory controller comprising:
-- a clock line (7) for a clock signal;
-- data receiving means (2) for connecting to the at least one memory module (3, 4, 5);
-- -data latching means (6) connected to the data receiving means (2), for latching data under control of a strobe signal; and
-- programmable means (20) for providing said strobe signal in programmed timing relation to said clock signal **characterised by** the system comprising:
-- first means for periodically measuring the value of a parameter indicative of the signal delay characteristics in the system in order to detect variations therein, and
-- second means responsive to variations in said signal delay characteristics detected by said first means, to change the programming of said programmable means to compensate said programmed timing relation for said variations.

2. A system according to claim 1, wherein the programmable means (20) comprise a programmable delay operatively connected between said clock line (7) and said data latching means (6).

3. A system according to claim 1, further comprising:
-- a memory control line (8) for a memory-read signal, and
-- means for producing said memory-read signal in timed relation to said clock signal;
said programmable means (20) being a programmable delay operatively connected between said memory-control line and said data latching means.

4. A system according to any one of the preceding claims, wherein the programmable means (20) comprise a programmable register for setting said programmed timing relation.

5. A system according to claim 4, wherein said programming means effects said programming upon power up of said system.

6. A system as claimed in any preceding claim wherein the programmable means comprises means arranged to perform the following steps
(a) - programming the programmable means to a given value;
(b) -using the memory controller to write data into memory means;
(c) -using the memory controller to read the data written into the memory means;
(d) -determining whether the data read in step (b) are identical to the data written in step (c);
(e) -repeating steps (a) to (d) until step (d) gives a positive result for at least one given value.
(f) -programming the programmable means to one of said at least one given value.

7. A system as claimed in claim 6, arranged so that said step (e) comprises incrementing said given value, and, once step,(d) has given a positive result, steps (a) to (d) are repeated until step (d) gives a negative result.

8. A system as claimed in claim 6 arranged so that said step (e) comprises decrementing said given value, and, once step (d) has given a positive result, steps (a) to (d) are repeated until step (d) gives a negative result.

9. A system as claimed in claim 7 or claim 8, arranged so that step (f) comprises choosing a value among a range of values for which step (d) gives a positive result.

10. A system as claimed in claim 6, arranged so that step (e) is repeated for all possible programmable values.

11. A system as claimed in claim 10 arranged so that step (f) comprises:
(g)determining ranges of values for which step (d) gives a positive result;
(h) determining the largest of these ranges of values;
and the programmable means being programmed to a value comprised in the largest of said ranges.

12. A method of enhancing the reliability of data reading in a memory controller from at least one memory module within a system, said memory controller comprising data receiving means (2) for connecting to said at least one memory module (3,4,5) and data latching means (6) connected to said data receiving means (2) for latching data under control of said reading strobe signal, said method comprising the step of
programming a delay between a clock signal (10) and a reading strobe signal; said method being **characterized by** the steps of
periodically measuring the value of a parameter indicative of the signal delay characteristics in the system in order to detect variations therein; and
-- responding to variations in said signal delay characteristics detected by said first means, to change the programming of said delay to compensate said programmed timing relation for said variations.

13. A method according to claim 12, wherein said programming is carried out at power-on of the memory controller.

14. A method according to claim 12, wherein said programming is carried out to compensate for voltage variations.

15. A method according to claim 12, wherein said programming is carried out to compensate for variations in processing load.

16. A method according to claim 12, wherein said programming is carried out to compensate for temperature variations.

17. A method as claimed in any of claims 12 to 16 wherein the delay is programmed in programmable means within the memory controller.

## Patentansprüche (Patentansprüche für folgende(n) Vertragsstaat(en): DE)

1. Ein System, das zumindest ein Speichermodul (3, 4, 5) und eine Speichersteuerung (19) aufweist, wobei die Speichersteuerung folgende Merkmale aufweist:
- eine Taktleitung (7) für ein Taktsignal;
- eine Datenempfangseinrichtung (2) zum Verbinden mit dem zumindest einen Speichermodul (3, 4, 5);
- eine Datenzwischenspeicherungseinrichtung (6), die mit der Datenempfangseinrichtung (2) verbunden ist, zum Zwischenspeichern von Daten unter der Steuerung eines Strobe-Signals; und
- eine programmierbare Einrichtung (20) zum Liefern des Strobe-Signals in programmierter Zeitgebungsbeziehung zu dem Taktsignal, **dadurch gekennzeichnet, dass** das System folgende Merkmale aufweist:
- eine erste Einrichtung zum periodischen Messen des Werts eines Parameters, der die Signalverzögerungscharakteristika in dem System anzeigt, um Abweichungen in demselben zu erfassen, und
- eine zweite Einrichtung, die auf Abweichungen in den Signalverzögerungscharakteristika anspricht, die durch die erste Einrichtung erfasst werden, um die Programmierung der programmierbaren Einrichtung zu ändern, um die programmierte Zeitgebungsbeziehung für die Abweichungen zu kompensieren.

2. Ein System gemäß Anspruch 1, bei dem die programmierbare Einrichtung (20) eine programmierbare Verzögerungseinrichtung aufweist, die wirksam zwischen die Taktleitung (7) und die Datenzwischenspeicherungseinrichtung (6) geschaltet ist.

3. Ein System gemäß Anspruch 1, das ferner folgende Merkmale aufweist:
- eine Speichersteuerungsleitung (8) für ein Speicherlesesignal, und
- eine Einrichtung zum Erzeugen des Speicherlesesignals in zeitlich abgestimmter Beziehung zu dem Taktsignal;
wobei die programmierbare Einrichtung (20) eine programmierbare Verzögerungseinrichtung ist, die wirksam zwischen die Speichersteuerungsleitung und die Datenzwischenspeicherungseinrichtung geschaltet ist.

4. Ein System gemäß einem der vorhergehenden Ansprüche, bei dem die programmierbare Einrichtung (20) ein programmierbares Register zum Einstellen der programmierten Zeitgebungsbeziehung aufweist.

5. Ein System gemäß Anspruch 4, bei dem die Programmierungseinrichtung das Programmieren nach dem Einschalten des Systems bewirkt.

6. Ein System gemäß einem der vorhergehenden Ansprüche, bei dem die programmierbare Einrichtung eine Einrichtung aufweist, die angeordnet ist, um die folgenden Schritte auszuführen:
(a) - Programmieren der programmierbaren Einrichtung auf einen gegebenen Wert;
(b) - Verwenden der Speichersteuerung zum Schreiben von Daten in die Speichereinrichtung;
(c) - Verwenden der Speichersteuerung zum Lesen der Daten, die in die Speichereinrichtung geschrieben sind;
(d) - Bestimmen, ob die Daten, die bei Schritt (b) gelesen werden, identisch zu den Daten sind, die bei Schritt (c) geschrieben werden;
(e) - Wiederholen der Schritte (a) bis (d), bis Schritt (d) ein positives Ergebnis für zumindest einen gegebenen Wert ergibt;
(f) - Programmieren der programmierbaren Einrichtung auf einen des zumindest einen gegebenen Werts.

7. Ein System gemäß Anspruch 6, das so angeordnet ist, dass der Schritt (e) das Inkrementieren des gegebenen Werts aufweist, und sobald Schritt (d) ein positives Ergebnis ergeben hat, Schritte (a) bis (d) wiederholt werden, bis Schritt (d) ein negatives Ergebnis ergibt.

8. Ein System gemäß Anspruch 6, das so angeordnet ist, dass Schritt (e) das Dekrementieren des gegebenen Werts aufweist, und sobald Schritt (d) ein positives Ergebnis ergeben hat, Schritte (a) bis (d) wiederholt werden, bis Schritt (d) ein negatives Ergebnis ergibt.

9. Ein System gemäß Anspruch 7 oder Anspruch 8, das so angeordnet ist, dass Schritt (f) das Auswählen eines Werts in einem Bereich von Werten aufweist, für die Schritt (d) ein positives Ergebnis ergibt.

10. Ein System gemäß Anspruch 6, das so angeordnet ist, dass Schritt (e) für alle möglichen programmierbaren Werte wiederholt wird.

11. Ein System gemäß Anspruch 10, das so angeordnet ist, dass Schritt (f) Folgendes aufweist:
(g) Bestimmen von Bereichen von Werten, für die Schritt (d) ein positives Ergebnis ergibt;
(h) Bestimmen des größten dieser Bereiche von Werten;
und bei dem die programmierbare Einrichtung auf einen Wert programmiert ist, der in dem größten der Bereiche enthalten ist.

12. Ein Verfahren zum Verbessern der Zuverlässigkeit des Lesens von Daten in einer Speichersteuerung aus zumindest einem Speichermodul innerhalb eines Systems, wobei die Speichersteuerung eine Datenempfangseinrichtung (2) zum Verbinden mit dem zumindest einen Speichermodul (3, 4, 5) und eine Datenzwischenspeicherungseinrichtung (6), die mit der Datenempfangseinrichtung (2) verbunden ist, aufweist, zum Zwischenspeichern von Daten unter der Steuerung des Lese-Strobe-Signals, wobei das Verfahren folgenden Schritt aufweist:
- Programmieren in einer programmierbaren Einrichtung innerhalb der Speichersteuerung einer Verzögerung zwischen einem Taktsignal (10) und einem Lese-Strobe-Signal aufweist;
wobei das Verfahren durch folgende Schritte gekennzeichnet ist:
- periodisches Messen des Werts eines Parameters, der die Signalverzögerungscharakteristika in dem System anzeigt, um Abweichungen in demselben zu erfassen; und
- Ansprechen auf Abweichungen bei den Signalverzögerungscharakteristika, die durch die erste Einrichtung erfasst werden, um die Programmierung der Verzögerung zu ändern, um die programmierte Zeitgebungsbeziehung für die Abweichungen zu kompensieren.

13. Ein Verfahren gemäß Anspruch 12, bei dem das Programmieren beim Einschalten der Speichersteuerung ausgeführt wird.

14. Ein Verfahren gemäß Anspruch 12, bei dem das Programmieren ausgeführt wird, um Spannungsabweichungen zu kompensieren.

15. Ein Verfahren gemäß Anspruch 12, bei dem das Programmieren ausgeführt wird, um Abweichungen bei der Verarbeitungslast zu kompensieren.

16. Ein Verfahren gemäß Anspruch 12, bei dem das Programmieren ausgeführt wird, um Temperaturabweichungen zu kompensieren.

## Patentansprüche (Patentansprüche für folgende(n) Vertragsstaat(en): FR, GB)

1. Ein System, das zumindest ein Speichermodul (3, 4, 5) und eine Speichersteuerung (19) aufweist, wobei die Speichersteuerung folgende Merkmale aufweist:
- eine Taktleitung (7) für ein Taktsignal;
- eine Datenempfangseinrichtung (2) zum Verbinden mit dem zumindest einen Speichermodul (3, 4, 5);
- eine Datenzwischenspeicherungseinrichtung (6), die mit der Datenempfangseinrichtung (2) verbunden ist, zum Zwischenspeichern von Daten unter der Steuerung eines Strobe-Signals; und
- eine programmierbare Einrichtung (20) zum Liefern des Strobe-Signals in programmierter Zeitgebungsbeziehung zu dem Taktsignal, **dadurch gekennzeichnet, dass** das System folgende Merkmale aufweist:
- eine erste Einrichtung zum periodischen Messen des Werts eines Parameters, der die Signalverzögerungscharakteristika in dem System anzeigt, um Abweichungen in demselben zu erfassen, und
- eine zweite Einrichtung, die auf Abweichungen in den Signalverzögerungscharakteristika anspricht, die durch die erste Einrichtung erfasst werden, um die Programmierung der programmierbaren Einrichtung zu ändern, um die programmierte Zeitgebungsbeziehung für die Abweichungen zu kompensieren.

2. Ein System gemäß Anspruch 1, bei dem die programmierbare Einrichtung (20) eine programmierbare Verzögerungseinrichtung aufweist, die wirksam zwischen die Taktleitung (7) und die Datenzwischenspeicherungseinrichtung (6) geschaltet ist.

3. Ein System gemäß Anspruch 1, das ferner folgende Merkmale aufweist:
- eine Speichersteuerungsleitung (8) für ein Speicherlesesignal, und
- eine Einrichtung zum Erzeugen des Speicherlesesignals in zeitlich abgestimmter Beziehung zu dem Taktsignal;
wobei die programmierbare Einrichtung (20) eine programmierbare Verzögerungseinrichtung ist, die wirksam zwischen die Speichersteuerungsleitung und die Datenzwischenspeicherungseinrichtung geschaltet ist.

4. Ein System gemäß einem der vorhergehenden Ansprüche, bei dem die programmierbare Einrichtung (20) ein programmierbares Register zum Einstellen der programmierten Zeitgebungsbeziehung aufweist.

5. Ein System gemäß Anspruch 4, bei dem die Programmierungseinrichtung das Programmieren nach dem Einschalten des Systems bewirkt.

6. Ein System gemäß einem der vorhergehenden Ansprüche, bei dem die programmierbare Einrichtung eine Einrichtung aufweist, die angeordnet ist, um die folgenden Schritte auszuführen:
(a) - Programmieren der programmierbaren Einrichtung auf einen gegebenen Wert;
(b) - Verwenden der Speichersteuerung zum Schreiben von Daten in die Speichereinrichtung;
(c) - Verwenden der Speichersteuerung zum Lesen der Daten, die in die Speichereinrichtung geschrieben sind;
(d) - Bestimmen, ob die Daten, die bei Schritt (b) gelesen werden, identisch zu den Daten sind, die bei Schritt (c) geschrieben werden;
(e) - Wiederholen der Schritte (a) bis (d), bis Schritt (d) ein positives Ergebnis für zumindest einen gegebenen Wert ergibt;
(f) - Programmieren der programmierbaren Einrichtung auf einen des zumindest einen gegebenen Werts.

7. Ein System gemäß Anspruch 6, das so angeordnet ist, dass der Schritt (e) das Inkrementieren des gegebenen Werts aufweist, und sobald Schritt (d) ein positives Ergebnis ergeben hat, Schritte (a) bis (d) wiederholt werden, bis Schritt (d) ein negatives Ergebnis ergibt.

8. Ein System gemäß Anspruch 6, das so angeordnet ist, dass Schritt (e) das Dekrementieren des gegebenen Werts aufweist, und sobald Schritt (d) ein positives Ergebnis ergeben hat, Schritte (a) bis (d) wiederholt werden, bis Schritt (d) ein negatives Ergebnis ergibt.

9. Ein System gemäß Anspruch 7 oder Anspruch 8, das so angeordnet ist, dass Schritt (f) das Auswählen eines Werts in einem Bereich von Werten aufweist, für die Schritt (d) ein positives Ergebnis ergibt.

10. Ein System gemäß Anspruch 6, das so angeordnet ist, dass Schritt (e) für alle möglichen programmierbaren Werte wiederholt wird.

11. Ein System gemäß Anspruch 10, das so angeordnet ist, dass Schritt (f) Folgendes aufweist:
(g) Bestimmen von Bereichen von Werten, für die Schritt (d) ein positives Ergebnis ergibt;
(h) Bestimmen des größten dieser Bereiche von Werten;
und bei dem die programmierbare Einrichtung auf einen Wert programmiert ist, der in dem größten der Bereiche enthalten ist.

12. Ein Verfahren zum Verbessern der Zuverlässigkeit des Lesens von Daten in einer Speichersteuerung aus zumindest einem Speichermodul innerhalb eines Systems, wobei die Speichersteuerung eine Datenempfangseinrichtung (2) zum Verbinden mit dem zumindest einen Speichermodul (3, 4, 5) und eine Datenzwischenspeicherungseinrichtung (6), die mit der Datenempfangseinrichtung (2) verbunden ist, aufweist, zum Zwischenspeichern von Daten unter der Steuerung des Lese-Strobe-Signals, wobei das Verfahren folgenden Schritt aufweist:
- Programmieren einer Verzögerung zwischen einem Taktsignal (10) und einem Lese-Strobe-Signal;
wobei das Verfahren durch folgende Schritte gekennzeichnet ist:
- periodisches Messen des Werts eines Parameters, der die Signalverzögerungscharakteristika in dem System anzeigt, um Abweichungen in demselben zu erfassen; und
- Ansprechen auf Abweichungen bei den Signalverzögerungscharakteristika, die durch die erste Einrichtung erfasst werden, um die Programmierung der Verzögerung zu ändern, um die programmierte Zeitgebungsbeziehung für die Abweichungen zu kompensieren.

13. Ein Verfahren gemäß Anspruch 12, bei dem das Programmieren beim Einschalten der Speichersteuerung ausgeführt wird.

14. Ein Verfahren gemäß Anspruch 12, bei dem das Programmieren ausgeführt wird, um Spannungsabweichungen zu kompensieren.

15. Ein Verfahren gemäß Anspruch 12, bei dem das Programmieren ausgeführt wird, um Abweichungen bei der Verarbeitungslast zu kompensieren.

16. Ein Verfahren gemäß Anspruch 12, bei dem das Programmieren ausgeführt wird, um Temperaturabweichungen zu kompensieren.

17. Ein Verfahren gemäß einem der Ansprüche 12 bis 16, bei dem die Verzögerung in einer programmierbaren Einrichtung innerhalb der Speichersteuerung programmiert wird.

## Revendications (Revendications pour l'(les) Etat(s) contractant(s) suivant(s): DE)

1. Système comportant au moins un module de mémoire (3, 4, 5) et un contrôleur de mémoire (19), le contrôleur de mémoire comprenant :
- une ligne d'horloge (7) pour un signal d'horloge ;
- 'un moyen récepteur de données (2) pour connexion à l'au moins un module de mémoire (3, 4, 5) ;
- un moyen de blocage de données (6) connecté au moyen récepteur de données (2), pour bloquer les données sous le contrôle d'un signal de cadencement ; et
- des moyens programmables (20) pour fournir ledit signal de cadencement en relation de séquencement programmé par rapport audit signal d'horloge, **caractérisé en ce que** le système comprend :
- un premier moyen pour mesurer périodiquement la valeur d'un paramètre indiquant les caractéristiques de retard de signal dans le système pour détecter des variations à l'intérieur, et
- un second moyen réagissant aux variations desdites caractéristiques de retard de signal détectées par ledit premier moyen, pour modifier la programmation desdits moyens programmables pour compenser lesdites variations dans ladite relation de séquencement programmé.

2. Système selon la revendication 1, dans lequel les moyens programmables (20) comprennent un retard programmable connecté fonctionnellement entre ladite ligne d'horloge (7) et ledit moyen de blocage de données (6).

3. Système selon la revendication 1, comprenant en outre :
- une ligne de contrôle de mémoire (8) pour un signal de lecture de mémoire, et
- un moyen pour produire ledit signal de lecture de mémoire en relation synchronisée avec ledit signal d'horloge ;
lesdits moyens programmables (20) étant un retard programmable connecté fonctionnellement entre ladite ligne de contrôle de mémoire et ledit moyen de blocage de données.

4. Système selon l'une quelconque des revendications précédentes, dans lequel les moyens programmables (20) comprennent un registre programmable pour déterminer ladite relation de séquencement programmé.

5. Système selon la revendication 4, dans lequel ledit moyen de programmation effectue ladite programmation à la mise sous tension dudit système.

6. Système selon l'une quelconque des revendications précédentes, dans lequel les moyens programmables comprennent un moyen agencé pour exécuter les étapes suivantes
(a) - programmer les moyens programmables à une valeur donnée ;
(b) - utiliser le contrôleur de mémoire pour écrire des données dans le moyen de mémoire ;
(c) - utiliser le contrôleur de mémoire pour lire les données écrites dans le moyen de mémoire ;
(d) - déterminer si les données lues à l'étape (b) sont identiques aux données écrites à l'étape (c) ;
(e) - répéter les étapes (a) à (d) jusqu'à ce que l'étape (d) fournisse un résultat positif pour au moins une valeur donnée ;
(f) - programmer les moyens programmables à l'une parmi ladite au moins une valeur donnée.

7. Système selon la revendication 6, agencé de telle sorte que ladite étape (e) comprenne l'incrémentation de ladite valeur donnée, et, lorsque l'étape (d) a fourni un résultat positif, les étapes (a) à (d) sont répétées jusqu'à ce que l'étape (d) fournisse un résultat négatif.

8. Système selon la revendication 6, agencé de telle sorte que ladite étape (e) comprenne la décrémentation de ladite valeur donnée, et, lorsque l'étape (d) a fourni un résultat positif, les étapes (a) à (d) sont répétées jusqu'à ce que l'étape (d) fournisse un résultat négatif.

9. Système selon la revendication 7 ou la revendication 8, agencé de telle sorte que l'étape (f) comprenne le choix d'une valeur parmi une plage de valeurs pour lesquelles l'étape (d) fournit un résultat positif.

10. Système selon la revendication 6, agencé de telle sorte que l'étape (e) soit répétée pour toutes les valeurs programmables possibles.

11. Système selon la revendication 10, agencé de telle sorte que l'étape (f) comprenne :
(g) la détermination de plages de valeurs pour lesquelles l'étape (d) fournit un résultat positif ;
(h) la détermination de la plus grande de! ces plages de valeur ;
et les moyens programmables étant programmés à une valeur comprise dans la plus grande desdites plages.

12. Procédé d'amélioration de la fiabilité de la lecture de données dans un contrôleur de mémoire à partir d'au moins un module de mémoire dans un système, ledit contrôleur de mémoire comprenant un moyen récepteur de données (2) pour connexion audit au moins un module de mémoire (3, 4, 5) et un moyen de blocage de données (6) connecté audit moyen récepteur de données (2), pour bloquer des données sous le contrôle dudit signal de cadencement de lecture, ledit procédé comprenant les étapes consistant à
programmer dans des moyens programmables situés dans le contrôleur de mémoire, un retard entre un signal d'horloge (10) et un signal de cadencement de lecture ;
ledit procédé étant **caractérisé par** les étapes consistant à
mesurer périodiquement la valeur d'un paramètre représentant les caractéristiques de retard du signal dans le système, pour détecter des variations à l'intérieur ; et
répondre aux variations desdites caractéristiques de retard du signal détectées par ledit premier moyen, pour modifier la programmation dudit retard pour compenser lesdites variations dans ladite relation de séquencement programmé.

13. Procédé selon la revendication 12, dans lequel ladite programmation est effectuée à la mise sous tension du contrôleur de mémoire.

14. Procédé selon la revendication 12, dans lequel ladite programmation est effectuée pour compenser les variations de tension.

15. Procédé selon la revendication 12, dans lequel ladite programmation est effectuée pour compenser les variations de charge de traitement.

16. Procédé selon la revendication 12, dans lequel ladite programmation est effectuée pour compenser les variations de température.

## Revendications (Revendications pour l'(les) Etat(s) contractant(s) suivant(s): FR, GB)

1. Système comportant au moins un module de mémoire (3, 4, 5) et un contrôleur de mémoire (19), le contrôleur de mémoire comprenant :
- une ligne d'horloge (7) pour un signal d'horloge ;
- un moyen récepteur de données (2) pour connexion à l'au moins un module de mémoire (3, 4, 5) ;
- un moyen de blocage de données (6) connecté au moyen récepteur de données (2), pour bloquer les données sous le contrôle d'un signal de cadencement ; et
- des moyens programmables (20) pour fournir ledit signal de cadencement en relation de séquencement programmé par rapport audit signal d'horloge, **caractérisé en ce que** le système comprend :
- un premier moyen pour mesurer périodiquement la valeur d'un paramètre indiquant les caractéristiques de retard de signal dans le système pour détecter des variations à l'intérieur, et
- un second moyen réagissant aux variations desdites caractéristiques de retard de signal détectées par ledit premier moyen, pour modifier la programmation desdits moyens programmables pour compenser lesdites variations dans ladite relation de séquencement programmé.

2. Système selon la revendication 1, dans lequel les moyens programmables (20) comprennent un retard programmable connecté fonctionnellement entre ladite ligne d'horloge (7) et ledit moyen de blocage de données (6).

3. Système selon la revendication 1, comprenant en outre :
- une ligne de contrôle de mémoire (8) pour un signal de lecture de mémoire, et
- un moyen pour produire ledit signal de lecture de mémoire en relation synchronisée avec ledit signal d'horloge ;
lesdits moyens programmables (20) étant un retard programmable connecté fonctionnellement entre ladite ligne de contrôle de mémoire et ledit moyen de blocage de données.

4. Système selon l'une quelconque des revendications précédentes, dans lequel les moyens programmables (20) comprennent un registre programmable pour déterminer ladite relation de séquencement programmé.

5. Système selon la revendication 4, dans lequel ledit moyen de programmation effectue ladite programmation à la mise sous tension dudit système.

6. Système selon l'une quelconque des revendications précédentes, dans lequel les moyens programmables comprennent un moyen agencé pour exécuter les étapes suivantes
(a) - programmer les moyens programmables à une valeur donnée ;
(b) - utiliser le contrôleur de mémoire pour écrire des données dans le moyen de mémoire ;
(c) - utiliser le contrôleur de mémoire pour lire les données écrites dans le moyen de mémoire ;
(d) - déterminer si les données lues à l'étape (b) sont identiques aux données écrites à l'étape (c) ;
(e) - répéter les étapes (a) à (d) jusqu'à ce que l'étape (d) fournisse un résultat positif pour au moins une valeur donnée ;
(f) - programmer les moyens programmables à l'une parmi ladite au moins une valeur donnée.

7. Système selon la revendication 6, agencé de telle sorte que ladite étape (e) comprenne l'incrémentation de ladite valeur donnée, et, lorsque l'étape (d) a fourni un résultat positif, les étapes (a) à (d) sont répétées jusqu'à ce que l'étape (d) fournisse un résultat négatif.

8. Système selon la revendication 6, agencé de telle sorte que ladite étape (e) comprenne la décrémentation de ladite valeur donnée, et, lorsque l'étape (d) a fourni un résultat positif, les étapes (a) à (d) sont répétées jusqu'à ce que l'étape (d) fournisse un résultat négatif.

9. Système selon la revendication 7 ou la revendication 8, agencé de telle sorte que l'étape (f) comprenne le choix d'une valeur parmi une plage de valeurs pour lesquelles l'étape (d) fournit un résultat positif.

10. Système selon la revendication 6, agencé de telle sorte que l'étape (e) soit répétée pour toutes les valeurs programmables possibles.

11. Système selon la revendication 10, agencé de telle sorte que l'étape (f) comprenne :
(g) la détermination de plages de valeurs pour lesquelles l'étape (d) fournit un résultat positif ;
(h) la détermination de la plus grande de ces plages de valeur ;
et les moyens programmables étant programmés à une valeur comprise dans la plus grande desdites plages.

12. Procédé d'amélioration de la fiabilité de la lecture de données dans un contrôleur de mémoire à partir d'au moins un module de mémoire dans un système, ledit contrôleur de mémoire comprenant un moyen récepteur de données (2) pour connexion audit au moins un module de mémoire (3, 4, 5) et un moyen de blocage de données (6) connecté audit moyen récepteur de données (2), pour bloquer des données sous le contrôle dudit signal de cadencement de lecture, ledit procédé comprenant les étapes consistant à
programmer un retard entre un signal d'horloge (10) et un signal de cadencement de lecture ;
ledit procédé étant **caractérisé par** les étapes consistant à
mesurer périodiquement la valeur d'un paramètre représentant les caractéristiques de retard du signal dans le système, pour détecter des variations à l'intérieur ; et
répondre aux variations desdites caractéristiques de retard du signal détectées par ledit premier moyen, pour modifier la programmation dudit retard pour compenser lesdites variations dans ladite relation de séquencement programmé.

13. Procédé selon la revendication 12, dans lequel ladite programmation est effectuée à la mise sous tension du contrôleur de mémoire.

14. Procédé selon la revendication 12, dans lequel ladite programmation est effectuée pour compenser les variations de tension.

15. Procédé selon la revendication 12, dans lequel ladite programmation est effectuée pour compenser les variations de charge de traitement.

16. Procédé selon la revendication 12, dans lequel ladite programmation est effectuée pour compenser les variations de température.

17. Procédé selon l'une quelconque des revendications 12 à 16, dans lequel le retard est programmé dans des moyens programmables situés dans le contrôleur de mémoire.
